# EUROPEAN PATENT SPECIFICATION

(11) **EP 3 418 022 B1**
(45) Date of publication and mention of the grant of the patent: **29.03.2023**
(21) Application number: 18165779.2
(22) Date of filing: 04.04.2018
(51) Int. Cl.: B29C 35/08, B29C 35/04, B29C 70/38

(54) **MULTI-PURPOSE HEATER FOR A MATERIAL PLACEMENT MACHINE**
MEHRZWECK-HEIZVORRICHTUNG FÜR EINE MATERIALPOSITIONIERUNGSMASCHINE
CHAUFFAGE À USAGES MULTIPLES POUR MACHINE DE PLACEMENT DE MATÉRIAUX

(30) Priority: 21.06.2017 US 201715629094
(43) Date of publication of application: 26.12.2018
(73) Proprietor: The Boeing Company, Arlington, VA 22202 (US)
(72) Inventor: HORST, Perry T., Chicago, 60606-1596 (US); JOHNSON, Brice A., Chicago, 60606-1596 (US)
(74) Representative: Witte, Weller & Partner Patentanwälte mbB

(56) References cited:
- US-A- 5 078 821
- US-B2- 7 731 816

## Description

### Field

The present disclosure relates generally to composite material placement machines, and more specifically to apparatuses and methods utilized by composite material placement machines in the manufacture of composite material structures.

### Background

During formation of composite material structures, multiple fiber-containing layers are placed by a composite material placement machine onto a mold or other such underlying substrate. The composite material placement machine continues to place additional layers on top of previously placed layers until the desired thickness and shape of the composite material is achieved. In some embodiments, the fiber-containing layers include carbon fibers, graphite fibers, glass fibers, cellulose fibers, polymer fibers, and the like. Furthermore, the fiber-containing layers are often impregnated with resin, epoxy, or other such binding material which provides support and shape to the fiber-containing layers.

As each fiber-containing layer is placed, the composite material placement machine also applies heat to the newly placed layer in order to tack the resin, epoxy, or other such binding material of the fiber-containing layer to a layer underneath, for example, a previously placed carbon fiber layer. In some cases, the composite material structure is built up with dissimilar fiber-containing layers that respond differently to certain types of heat. For example, a composite material structure can be built up with layers of carbon fiber layers, glass fiber layers, and other such materials. The carbon fiber layers can be quickly heated and tacked with a radiant heat source, such as but not limited to, infrared heat because carbon fiber efficiently absorbs the radiant heat. However, glass fibers, or other non-carbon containing material may not be quickly heated and tacked with radiant heat because the radiant heat is not efficiently absorbed by glass fibers. Rather, another heat source, such as convection heat, may be used to heat the glass fiber layer, or other such non-carbon containing layer.

Document US 7,731,816 B2 discloses an apparatus according to the preamble of claim 1 and a method according to the preamble of claim 10. According to its abstract it discloses an apparatus comprising a fiber placement head assembly and an infrared heating assembly. The fiber placement head assembly includes a compaction roller assembly and a feeder assembly. An infrared heating assembly, a cooling mechanism, temperature sensors, and a controller are operably coupled to the fiber placement head assembly. The infrared heating assembly includes an infrared heater that generates a heating profile. The heating profile defines a heating zone on either a tool or previously laid tows. If the burn point of either the tool or previously laid tows within the heating zone is approached, the controller, which receives temperature readings from the temperature sensors, simultaneously disables the infrared heater and activates the cooling mechanism.

It is with respect to these considerations and others that the disclosure made herein are presented.

### Summary

Therefore, there are provided a heating apparatus and a method according to the independent claims.

Any examples and embodiments of the description not falling within the scope of the appended claims do not form part of the invention and are provided for illustrative purposes, only.

In accordance with one example of the present disclosure, a heating apparatus for heating a reinforcing layer of a composite material structure is disclosed. In an embodiment, the heating apparatus is configured with a housing which includes a base and a housing body extending upwards from the base to define a housing interior space. Furthermore, a radiant heating assembly is disposed within the housing interior space and configured to transfer a radiant heat to the reinforcing layer. Additionally, the heating apparatus includes a convection heating assembly formed within the housing and the convection heating assembly includes at least one convection assembly gas passage formed within the housing body. A convection assembly gas outlet is coupled to an end of the at least one convection assembly gas passage. Moreover, a convection assembly gas flows through the at least one convection assembly gas passage and the convection assembly gas exits through the convection assembly gas outlet such that the convection assembly gas outlet directs the convection assembly gas to flow along the radiant heating assembly in order to heat the convection assembly gas and produce a convection heat. The heating apparatus further includes at least one direction gas passage formed in the base of the housing, and the at least one redirection gas passage is configured to transport a redirection gas to a convection heat application point defined by the housing body. Additionally, the heating apparatus includes a redirection nozzle positioned at the convection heat application point, and the redirection nozzle is formed in the housing body and coupled to an end of the at least one redirection gas passage. Furthermore, as the redirection gas exits the redirection nozzle the redirection gas directs the convection assembly gas and the convection heat towards the reinforcing layer.

In accordance with another example of the present disclosure, a method of heating one or more reinforcing layers during the manufacture of a composite material structure is disclosed. The method includes producing a radiant heat from the radiant heating assembly and directing the radiant heat towards the reinforcing layer to heat the reinforcing layer. Moreover, the method further includes flowing a convection assembly gas along the radiant heating assembly to heat the convection assembly gas to produce a convection heat. Additionally, the method includes directing the flow of the convection assembly gas and the convection heat towards a convection heat application point. Furthermore, the method includes flowing a redirection gas from the at least one redirection nozzle formed at the convection heat application point. The method further includes directing the convection heat supply towards the composite material using the redirection gas flowing from the at least one redirection nozzle such that the reinforcing layer is simultaneously heated by the radiant heat and the convection heat.

In accordance with yet another example of the present disclosure, a composite material placement head for an automated material placement machine is disclosed. The composite material placement head includes a vee block configured with a first material placement module which defines a placement path of a first reinforcing layer and a second material placement module which defines a placement path of a second reinforcing layer. Moreover, the composite material placement head further includes a material application point formed at an intersection of the first material placement module and the second material placement module of the vee block, wherein the first reinforcing layer and the second reinforcing layer are applied to a substrate during lay-up of a composite material structure. Moreover, the composite material placement head includes a heating apparatus coupled to the composite material placement head and the heating apparatus is positioned adjacent to the material application point. The heating apparatus further includes a housing including a base and a housing body extending upwards from the base to define a housing interior space. The heating apparatus further includes a radiant heating assembly disposed within the housing interior space, and the radiant heating assembly is configured to transfer a radiant heat to the material application point such that the radiant heat is applied to each of the first reinforcing layer and the second reinforcing layer as they are applied to the substrate. Additionally, the heating apparatus includes a convection heating assembly formed within the housing including at least one convection assembly gas passage, wherein a convection assembly gas flows through the at least one convection assembly gas passage and the convection assembly gas exits through the convection assembly gas outlet. Moreover, the assembly gas outlet directs the convection assembly gas to flow along the radiant heating assembly in order to heat the convection assembly gas and produce a convection heat. The heating apparatus further includes at least one redirection gas passage formed in the base of the housing, the at least one redirection gas passage configured to transport a redirection gas to a convection heat application point defined by the housing body. The heating apparatus includes a redirection nozzle positioned at the convection heat application point, the convection heat application point corresponding with the material application point, the redirection nozzle formed in the housing body and coupled to an end of the at least one redirection gas passage, wherein the redirection gas exits the redirection nozzle such that the redirection gas directs the convection assembly gas towards the convection heat application point and the material application point such that the convection heat is applied to each of the first reinforcing layer and the second reinforcing layer as they are placed on the substrate. Furthermore, the composite material placement head includes an electronic controller communicably coupled to the composite material placement head and the heating apparatus, wherein the heating apparatus includes a control valve operably coupled to the at least one convection assembly gas passage and the at least one redirection gas passage, and wherein the electronic controller is programmed to selectively activate the control valve such that the convection assembly gas is supplied to the at least one convection assembly gas passage and the at least one redirection gas passage, as needed.

The features, functions, and advantages disclosed herein can be achieved independently in various embodiments or may be combined in yet other embodiments, the details of which may be better appreciated with reference to the following description and drawings.

### Brief Description of the Drawings

FIG. 1 is a perspective view of an exemplary vehicle constructed in accordance with the present disclosure;
FIG. 2 is a perspective view of an exemplary composite material layup in accordance with an embodiment of the present disclosure;
FIG. 3 is a perspective view of an exemplary material placement machine used to fabricate the composite material layup of FIG. 2, in accordance with an embodiment of the present disclosure;
FIG. 4 is a partial sectional view of an exemplary composite material placement head of the material placement machine of FIG. 3, in accordance with an embodiment of the present disclosure;
FIG. 5 is a perspective view of a heating apparatus coupled to the composite material placement head of FIG. 4, in accordance with an embodiment of the present disclosure;
FIG. 6 is a perspective view of a housing of the heating apparatus of FIG. 5, in accordance with an embodiment of the present disclosure; and
FIG. 7 is flow diagram illustrating a method of heating the composite material layup, in accordance with an embodiment of the present disclosure.

It should be understood that the drawings are not necessarily to scale, and that the disclosed embodiments are illustrated diagrammatically, schematically, and in some cases in partial views. In certain instances, details which are not necessary for an understanding of the disclosed methods and apparatuses or which render other details difficult to perceive may have been omitted. It should be further understood that the following detailed description is merely exemplary and not intended to be limiting in its application or uses. As such, although the present disclosure is for purposes of explanatory convenience only depicted and described in illustrative embodiments, the disclosure may be implemented in numerous other embodiments, and within various systems and environments not shown or described herein.

### Detailed Description

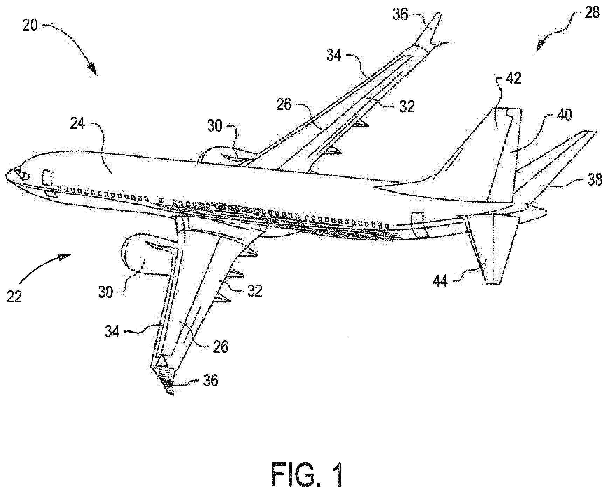

Referring to FIG. 1, a vehicle 20 is illustrated. One non-limiting example of the vehicle 20 is that of an aircraft; however the present disclosure applies to other types of vehicles and machines as well. As illustrated, the vehicle 20 is configured with an airframe 22 which includes a fuselage 24, wings 26, and a tail section 28. In some embodiments, one or more propulsion units 30 are coupled to each wing 26 in order to propel the vehicle 20 in a direction of travel. Furthermore, the wings 26 are fixedly attached to the fuselage 24 and the propulsion units 30 are attached to an underside surface of the wings 26, however other attachment locations of the propulsion units 30 are possible. In some embodiments, the wings 26 are positioned at a substantially centered position along the fuselage 24, and the wings 26 are configured to include a plurality of flaps 32, leading edge devices 34, and peripheral edge devices 36 (i.e., winglets). Moreover, during operation of the vehicle 20, the flaps 32, leading edge devices 34 and peripheral edge devices 36 are capable of being adjusted in a plurality of positions in order to control and stabilize the vehicle 20. For example, the flaps 32 and leading edge devices 34 are adjustable in several different positions to produce the desired lift characteristics of the wings 26. Additionally, the tail section 28 of the airframe 22 includes components, such as an elevator 38, a rudder 40, a vertical stabilizer fin 42, and a horizontal stabilizer 44, which provide other stability and maneuverability functions of the vehicle 20.

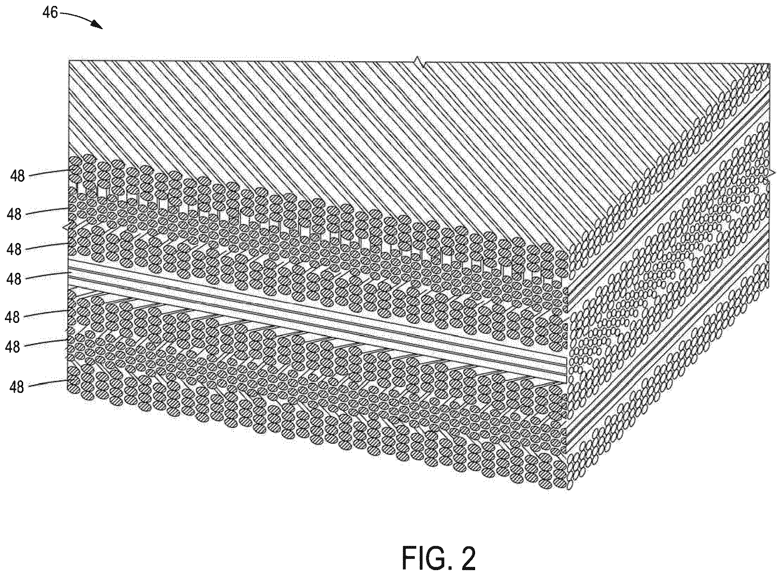

Generally, the fuselage 24, wings 26, tail section 28, or other such component of the vehicle 20 are constructed out of aluminum, aluminum alloy, titanium, composite material, other such material, or any combination thereof. Referring now to FIG. 2, one non-limiting example of a composite material layup 46 used to fabricate, or otherwise construct, assemblies and systems of the vehicle 20 (FIG. 1) is illustrated. The composite material layup 46 is built, or laid up with composite material composed of one or more reinforcing layers 48. In an embodiment, the reinforcing layers 48 are stacked or otherwise arranged such that the stacking pattern is repeated to build-up the desired thickness or structure of the composite material layup 46. In some embodiments, the reinforcing layers 48 are composed of carbon-fiber, glass-fiber, mineral-fiber, or other such material; however, the reinforcing layers 48 can be composed of other materials. Moreover, in one non-limiting example, each reinforcing layer 48 of the composite material layup 46 is formed such that the carbon-fibers, glass-fibers, mineral-fibers, or other such fibers are arranged in a unidirectional pattern to provide a tough, durable and lightweight structural material for use in fiber reinforced composite materials. Additionally, in some embodiments, the composite material layup 46 is formed by arranging the unidirectional pattern of each reinforcing layer 48 in different directions. For example, the composite material layup 46 is formed by arranging the unidirectional pattern of each reinforcing layer 48 at 0, 45, -45, and 90 degree orientations with respect to one another. However, other arrangement of the reinforcing layers 48 is possible to form the composite material layup 46 with the desired set of characteristics (i.e., weight, strength, shape).

In some embodiments, the reinforcing layers 48 used to form the composite material layup 46 can be pre-impregnated (i.e., pre-preg), or otherwise infused, with matrix material, such as resin, epoxy, or other such hardening material. Furthermore, during formation or build-up of the composite material layup 46 the reinforcing layers 48 are heated to tack the matrix material. This heating and tacking of the matrix material causes the newly placed reinforcing layer 48 to lightly stick to the underlying reinforcing layer 48. As a result, the build-up of reinforcing layers 48 doesn't move or slide out of position during formation of the composite material layup 46. Additionally, in some embodiments, the heating and tacking of the matrix material allows the reinforcing layers 48 to be molded or otherwise formed into different shapes during formation of the composite material layup 46.

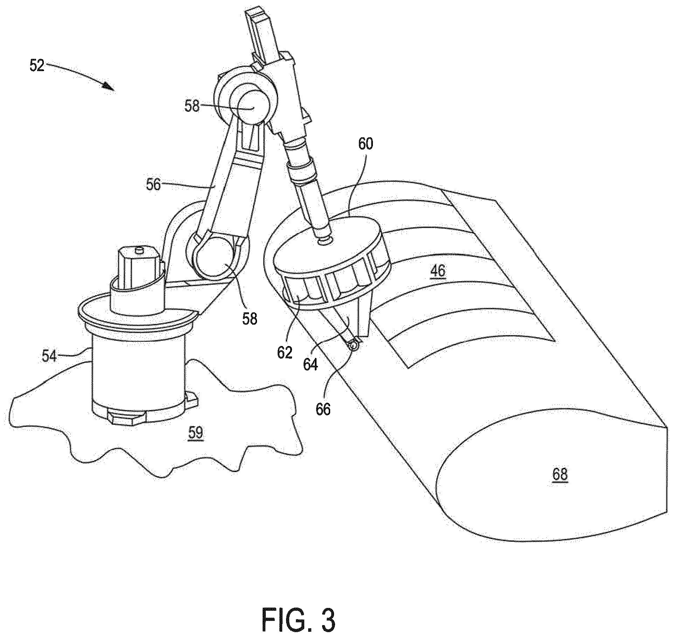

Referring now to FIG. 3, an exemplary material placement machine 52 used to form the composite material layup 46 is illustrated. In some embodiments, the material placement machine 52 includes a base 54, and an arm 56 that is rotatably coupled to the base 54 by at least one rotatable joint 58. Furthermore, in the non-limiting example illustrated in FIG. 3, the base 54 is fixedly attached to the floor 59 of a work area. However, in alternative embodiments the base 54, or other portion of the material placement machine 52, is attached to an overhead gantry, an automated guided vehicle (AGV), or other such movable platform, and the material placement machine 52 is moved around to different locations within the work area. Furthermore, an embodiment of the material placement machine 52 is configured with an end effector 60 that includes one or more composite material rolls 62 and a composite material placement head 64. The one or more composite material rolls 62 supply material such as the reinforcing layers 48 (FIG. 2), and other such layers used to form the composite material layup 46. Furthermore, an embodiment of the material placement machine 52 is configured with a roller assembly 66 positioned at an axial end of the composite material placement head 64. Moreover, the composite material placement head 64 and a roller assembly 66 are utilized by the material placement machine 52 to place the material from the one or more composite material rolls 62 (i.e., reinforcing layers 48 shown in FIG. 2) during build-up of the composite material layup 46.

As discussed above, the composite material layup 46 is used to fabricate, or otherwise construct, components and assemblies, such as but not limited to, the fuselage 24, the wings 26, the tail section 28, or other such components of the vehicle 20 (FIG. 1). Furthermore, these components and assemblies often are formed using a variety of convex, concave and other such curved or shaped surfaces. As a result, to form the desired shape of the composite material layup 46, the material placement machine 52 can be arranged or otherwise controlled to place the reinforcing layers 48 (FIG. 2) of the composite material layup 46 onto a composite layup mold 68, or other such template, that is adjacent to the material placement machine 52. During formation of the composite material layup 46, the reinforcing layers 48 will generally follow the shape and dimension of the composite layup mold 68 which the composite material layup 46 is being formed upon. As a result, a different composite layup mold 68 is used to shape or otherwise form different components and assemblies (i.e., fuselage 24, wing 26, tail section 28, and other such components shown in FIG. 1).

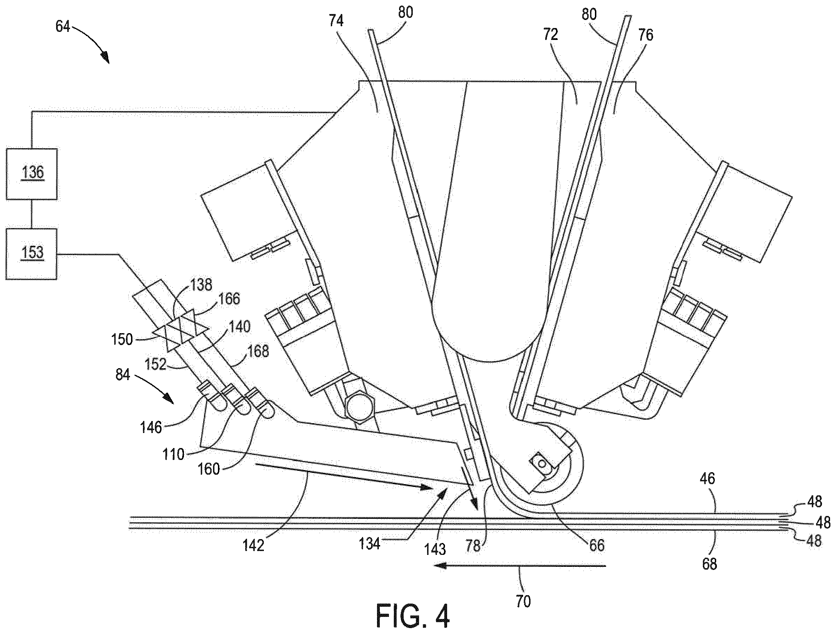

Referring to FIG. 4 with continued reference to FIG. 3, one non-limiting example of the composite material placement head 64 of the material placement machine 52 is shown. As mentioned above, the composite material placement head 64 is configured with the roller assembly 66 located at an axial end of the composite material placement head 64. Additionally, the roller assembly 66 is configured to contact a surface of the composite layup mold 68, or other such substrate or template. In some embodiments, the roller assembly 66 rolls along the surface of the composite layup mold 68 in a direction 70 and compacts or conforms the composite material layup 46 (i.e., reinforcing layers 48) according to the underlying composite layup mold 68. However, it will be understood the roller assembly 66 can move in a plurality of directions, and the roller assembly 66 movement depends on the actuation and control of the material placement machine 52. Furthermore, as the reinforcing layers 48 are placed onto the composite layup mold 68, the roller assembly 66 rolls over and compacts the newly placed material (i.e., reinforcing layers 48) to help shape the composite material layup 46 according to the underlying composite layup mold 68.

In one non-limiting example, the composite material placement head 64 includes a vee block 72 that includes a first material placement module 74 and a second material placement module 76. Furthermore, in some embodiments, the vee block 72 has a triangular shape and the first material placement module 74 and the second material placement module 76 define a material application point 78 at a vertex of the vee block 72. Moreover, in an embodiment, the material application point 78 is adjacent to the roller assembly 66 and the material application point 78 is configured to apply or otherwise position the reinforcing layers 48 of the composite material layup 46 onto the composite layup mold 68. The shape and orientation of the vee block 72 provides one non-limiting example of the composite material placement head 64. Other configurations of the first material placement module 74, the second material placement module 76, the material application point 78 and other components of the composite material placement head 64 are possible. Likewise, FIG. 4 illustrates the first and second material placement modules 74, 76; however an alternative embodiment of the composite material placement head 64 can incorporate a different (i.e., smaller or larger) number of material modules as needed.

As described above, during formation of the composite material layup 46, a plurality of composite material layers (i.e., reinforcing layers 48) are laid down, or otherwise positioned onto the composite layup mold 68. In some embodiments, the reinforcing layers 48 are built-up from bundles of reinforcing fibers 80 that are fed into the first material placement module 74 and the second material placement module 76. Furthermore, in some embodiments, the bundles of reinforcing fibers 80 take the form of slit tape, fiber tows, and the like as the bundles of reinforcing fibers 80 are fed into the composite material placement head 64 of the material placement machine 52. In some embodiments, the bundles of reinforcing fibers 80 are pre-impregnated (i.e., pre-preg), or otherwise infused, with matrix material, such as resin, epoxy, or other such hardening material. The bundles of reinforcing fibers 80 used to form the composite material layup 46 are placed on the composite layup mold 68 to shape the composite material layup 46. As such, each reinforcing layer 48 that is formed from the bundles of reinforcing fibers 80 is exposed to heat or other such energy to tack the matrix material (i.e., resin or epoxy) which causes the newly placed reinforcing layer 48 to stick or otherwise adhere to the underlying reinforcing layer 48 during the build-up of the composite material layup 46.

An embodiment of the composite material placement head 64 includes a heating apparatus 84 configured to apply heat to the reinforcing layers 48 during formation of the composite material layup 46. As shown in the exemplary embodiment illustrated in FIG. 4, the heating apparatus 84 is operably attached to the composite material placement head 64 and placed adjacent to the material application point 78 and the roller assembly 66; however other positioning of the heating apparatus 84 is possible. Furthermore, the heating apparatus 84 is configured to apply heat to the reinforcing layers 48 formed from the bundles of reinforcing fibers 80 that are fed into the material placement machine 52. The heating apparatus 84 heats the reinforcing layers 48 as they are placed onto the composite layup mold 68, or other such surface, during build-up of the composite material layup 46. The heating apparatus 84 is configured to supply or otherwise provide heat such as but not limited to, infrared (IR) radiant heat, convection heat, ultraviolet (UV) heat, or other such heating energy. Additionally or alternatively, the heating apparatus 84 is configured to supply two or more different types of heat that can be used simultaneously or independently of one another. In one non-limiting example, the heating apparatus 84 is configured to supply IR radiant heat to heat IR sensitive material and convection heat to heat convection heat sensitive material; however other configurations of the heating apparatus 84 are possible to supply the type of heat or energy desired.

In some embodiments, the composite material layup 46 is formed from reinforcing layers 48 including bundles of reinforcing fibers 80 are pre-impregnated with matrix material (i.e., resin, epoxy, or other hardening material). The reinforcing layers 48 are placed onto the composite layup mold 68 in an uncured or semi-cured state. Furthermore, the roller assembly 66 rolls along the composite layup mold 68 and the heating apparatus 84 applies heat to the newly placed reinforcing layers 48 to tack the matrix material of the newly placed reinforcing layers 48. As a result, the roller assembly 66 shapes or otherwise forms the newly placed reinforcing layers 48 according to the underlying layup mold 68 and the heating apparatus 84 heats and tacks the newly placed reinforcing layer 48 so each layer does not slide or otherwise move around during build-up of the composite material layup 46.

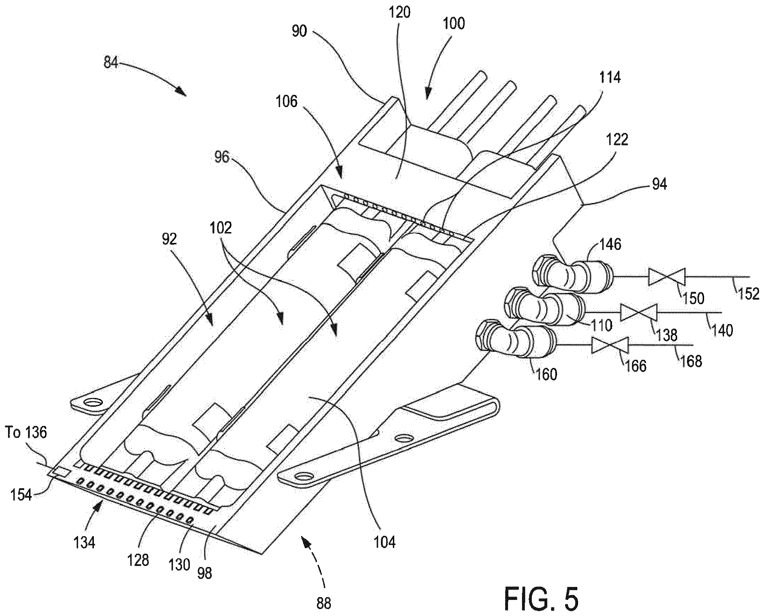

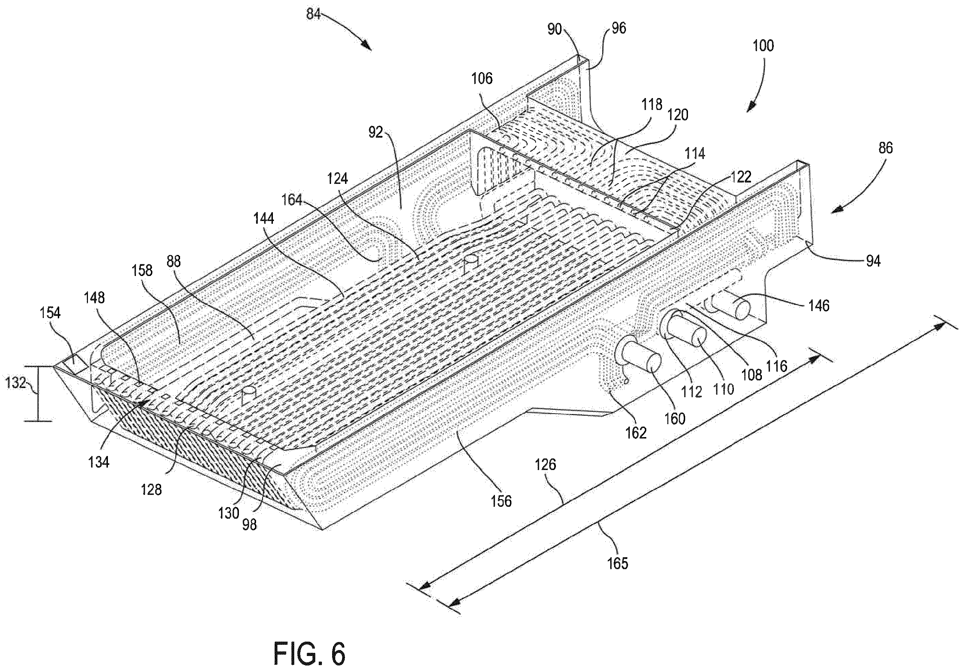

Referring now to FIG. 5 and 6, with continued reference to FIG. 4, an exemplary embodiment of the heating apparatus 84 is shown. For simplicity, FIGS. 5 and 6 show the heating apparatus 84 separate from the composite material placement head 64. However, during operation the heating apparatus 84 is typically operably attached to the composite material placement head 64 as shown in FIG. 4. The heating apparatus 84 is configured with a housing 86 that includes a base 88 and a housing body 90 which extends upwards from the base 88 to define a housing interior space 92. In one non-limiting example, the housing body 90 further includes a first sidewall 94, a second sidewall 96 and an end wall 98. The first sidewall 94 opposes the second sidewall 96 and the first sidewall 94 and the second sidewall 96 are spaced apart by the end wall 98. As shown in FIG. 5 and 6, the housing 86 further includes an open end 100 which opposes the end wall 98; however the housing 86 can alternatively be configured with a second end wall, as needed.

As described above, the heating apparatus 84 is configured to supply or otherwise generate heat which can be applied to the reinforcing layers 48 that are formed from the bundles of reinforcing fibers 80 during build-up of the composite material layup 46. In one non-limiting example, the heating apparatus 84 includes a radiant heating assembly 102 with a radiant heating element 104, such as but not limited to an IR heating element. The radiant heating element 104 is configured to generate radiant heat used to heat and tack the reinforcing layers 48. Generally, the radiant heating assembly 102 is used to supply IR radiant heat to the reinforcing layers 48 that contain carbon, graphite, or other such IR absorbing material. Additionally, the heating apparatus 84 includes a convection heating assembly 106 that is incorporated with the housing 86 of the heating apparatus 84. The convection heating assembly 106 is configured to include at least one convection assembly gas passage 108. In an embodiment, the convection assembly gas passage 108 is formed within the housing body 90. Furthermore, a convection assembly gas inlet 110 is coupled to a first end 112 of the convection assembly gas passage 108 and a convection assembly gas outlet 114 is connected to a second end of the convection assembly gas passage 108.

The convection assembly gas inlet 110 is in fluid communication with the convection assembly gas outlet 114 by the convection assembly gas passage 108. As a result, a convection assembly gas (i.e., compressed air, nitrogen, or other such gas) enters the convection assembly gas inlet 110, flows through the convection assembly gas passage 108, and flows, or otherwise exits through the convection assembly gas outlet 114. Moreover, the convection assembly gas outlet 114 is configured to direct the convection assembly gas to flow along the radiant heating assembly 102 such that the convection assembly gas is heated by the radiant heating element 104 to produce a convection heat supply. In one non-limiting example, the first end 112 of the convection assembly gas passage 108 is configured as a convection assembly gas manifold 116, or other such distribution structure, and the convection assembly gas manifold 116 branches into a plurality of convection assembly gas distribution passages 118 that are formed within the housing body 90. Furthermore, each passage of the plurality of convection assembly gas distribution passages 118 are coupled to a convection assembly gas outlet 114, and each of the convection assembly gas outlets 114 are configured to direct the convection assembly gas to flow over the radiant heating assembly 102 to heat the convection assembly gas and produce the convection heat supply.

In some embodiments, the heating apparatus 84, and more specifically the convection heating assembly 106, includes a bridge structure 120 positioned above the radiant heating assembly 102. Furthermore, in some embodiments the bridge structure 120 is configured to extend between the first sidewall 94 and the second sidewall 96 of the housing body 90. Additionally, one or more convection assembly gas outlets 114 are formed in an exterior surface 122 of the bridge structure 120 such that as the convection assembly gas exits the one or more convection assembly gas outlets 114 the convection assembly gas is directed to flow along the radiant heating assembly 102. As described above, the at least one convection assembly gas passage 108 may be formed within the first sidewall 94, the second sidewall 96, or other location of the housing 86. Additionally, the first end 112 of the convection assembly gas passage 108 is configured as the convection assembly gas manifold 116 which branches into a plurality of convection assembly gas distribution passages 118 which extend from the convection assembly gas manifold 116, through the interior of the bridge structure 120. Each passage of the plurality of convection assembly gas distribution passages 118 exit the bridge structure 120 through the convection assembly gas outlet 114 formed in the exterior surface 122 of the bridge structure 120.

Generally, the one or more convection assembly gas outlets 114 are formed as an opening in the exterior surface 122 of the bridge structure 120. Furthermore, the one or more convection assembly gas outlets 114 are configured with a circular, semi-circular, non-circular or other such convection outlet geometry that produces a turbulent airflow as the convection assembly gas exits the one or more convection assembly gas outlets 144. Moreover, in some embodiments, the one or more convection assembly gas outlets 114 include sharp edges and other such features to help produce the desired amount of turbulence as the convection assembly gas exits the one or more convection assembly gas outlets 114. Alternatively, in some embodiments, the one or more convection assembly gas outlets 114 are configured to produce a laminar airflow as the convection assembly gas exits the one or more convection assembly gas outlets 114. Generally, turbulent air flow generates more noise compared to laminar air flow. Therefore, in cases where noise is an issue and/or concern, the convection assembly gas noise can be reduced by configuring the convection assembly gas outlets 114 to provide a laminar air flow.

In one non-limiting example, the heating apparatus 84 may further be configured to include at least one redirection gas passage 124 formed within the base 88 of the housing 86 and, the redirection gas passage 124 may also be coupled to the convection assembly gas manifold 116. Moreover, the redirection gas passage 124 may be configured to extend along a length 126 of the housing 86 between the convection assembly gas manifold 116 and the end wall 98 of the housing body 90. Additionally, at the end wall 98, some embodiments of the redirection gas passage 124 extend upwards a height 132 from the base 88 through the end wall 98, and exit the housing body 90 through a redirection nozzle 128 formed through the surface 130 of the end wall 98. Furthermore, the redirection gas passage 124 may be enclosed within the base 88 and the end wall 98 of the housing 86, and the redirection nozzle 128 is formed at a second end of the redirection gas passage 124 which defines a convection heat application point 134 of the convection heating assembly 106.

As discussed above, some embodiments of the redirection gas passage 124 are coupled to the convection assembly gas manifold 116. As such, the convection assembly gas inlet 110 is also in fluid communication with the redirection nozzle 128 by way of the convection assembly gas manifold 116 and the redirection gas passage 124. As a result, the convection assembly gas (i.e., compressed air, nitrogen, or other such gas) which enters the convection assembly gas inlet 110, also flows through the redirection gas passage 124, and exits through the redirection nozzle 128 at the convection heat application point 134. In an alternative embodiment, the housing 86 may be configured with a geometry such that the heated convection assembly gas can be directed towards the surface of the composite layup mold 68 without the need to flow convection assembly gas through the redirection nozzle 128 in order to redirect the heated convection assembly gas to the desired location. As a result, some embodiments of the heating apparatus 84 may be configured without the redirection gas passage 124 and the redirection nozzle 128 formed in the housing 86.

Referring back to FIG. 4, with continued reference to FIGS. 5 and 6, an illustration of the heating apparatus 84 applying the convection heat is shown. Generally, the heating apparatus 84 is operably attached to the composite material placement head 64 such that the radiant heating assembly 102 and the convection heating assembly 106 are positioned adjacent to the reinforcing layers 48 as they are placed onto the composite layup mold 68. In some embodiments, the material placement machine 52 (FIG. 2), the composite material placement head 64, and the heating apparatus 84 are electronically coupled to an electronic controller 136, and the electronic controller 136 is configured to send and receive signals to the material placement machine 52 during the formation of the composite material layup 46. Furthermore, the electronic controller 136 is communicably coupled to a convection assembly gas control valve 138 which is in fluid communication with a convection assembly gas supply line 140. In some embodiments, the convection assembly gas control valve 138 is operably controlled by the electronic controller 136 to control the flow of convection assembly gas to the convection assembly gas inlet 110 and the convection heating assembly 106. During operation, the electronic controller 136 sends a signal or other such command, that instructs the convection assembly gas control valve 138 to actuate (i.e., open or close) such that the convection assembly gas is able to flow through the convection assembly gas supply line 140 and into the convection assembly gas inlet 110 and the convection heating assembly 106. Moreover, as the convection assembly gas enters the convection assembly gas inlet 110, a portion of the convection assembly gas is directed through the convection assembly gas passage 108 and directed through the redirection gas passage 124.

The convection assembly gas directed through the convection assembly gas passage 108 flows through the convection assembly gas outlet 114 that is formed in the housing body 90 of the heating apparatus 84. As further illustrated in FIG. 4, the convection assembly gas flows along the radiant heating assembly 102 and the radiant heating element 104 in the direction shown by arrow 142 and the convection assembly gas is heated by the radiant heating assembly 102 towards the convection heat application point 134. Additionally, a portion of the convection assembly gas that enters the convection assembly gas inlet 110 is directed through the redirection gas passage 124 to provide a supply of redirection gas. The redirection gas flows through the redirection gas passage 124 towards the end wall 98. As the redirection gas, reaches the end wall 98 the redirection gas flows out of the redirection nozzle 128 towards the surface of the composite layup mold 68, as illustrated by arrow 143. The heated convection assembly gas flows in the direction according to arrow 142. When the heated convection assembly gas reaches the convection heat application point 134 at the end wall 98, the heated convection assembly gas is directed towards the surface of the composite layup mold 68 by the redirection gas, according to arrow 143. As a result, the heated convection assembly gas is used to heat to the reinforcing layers 48 that are placed on the surface of the composite layup mold 68. In some embodiments, the radiant heating assembly 102 and the convection heating assembly 106 are used simultaneously to supply and deliver radiant heat and convection heat to tack the reinforcing layers 48 that form the composite material layup 46.

In one non-limiting example, the ability to simultaneously provide radiant heat (i.e., IR heat) and convection heat is advantageous when the composite material layup 46 is composed of two or more dissimilar materials. For example, one of the bundles of reinforcing fibers 80 that form the reinforcing layers 48 includes carbon, graphite, (i.e., carbon fiber) or other such material capable of absorbing radiant heat. As a result, during build-up of the composite material layup 46 the radiant heat produced by the radiant heating assembly 102 heats and tacks the matrix material incorporated with the reinforcing layers 48 that contain carbon or graphite material. Moreover, the remaining one of the bundles of reinforcing fibers 80 that forms the reinforcing layers 48 includes a non-carbon, non-graphite containing material (i.e., glass fiber) or other such material that does not efficiently absorb radiant heat. As such, during build-up of the composite material layup 46 the radiant heating assembly 102 does not sufficiently heat and tack the matrix material incorporated with the reinforcing layers 48 that include non-carbon or non-graphite containing material because the radiant heat is not efficiently absorbed by these materials. Rather, during build-up of the composite material layup 46 the convection heating assembly 106 is configured to supply or otherwise provide convection heat in order to heat or tack the matrix material incorporated with the reinforcing layers 48 that contains non-carbon or non-graphite material.

Referring back to FIG. 6, an embodiment of the heating apparatus 84 further includes at least one radiant assembly gas passage 144 that is formed within the base 88 of the housing 86. In one non-limiting example, the radiant assembly gas passage 144 is enclosed within the base 88 of the housing 86 such that radiant assembly gas passage 144 forms a passageway contained within a thickness of the base 88, and other portions of the housing 86. Furthermore, a first end of the radiant assembly gas passage 144 is coupled to a radiant assembly gas inlet 146 formed in the housing body 90 of the heating apparatus 84. Moreover, similar to the redirection gas passage 124, the radiant assembly gas passage 144 is configured to extend along the length 126 of the housing 86 between the radiant assembly gas inlet 146 and the end wall 98 of the housing body 90. Additionally, in some embodiments the radiant assembly gas passage 144 is configured to run parallel, or substantially parallel, to the redirection gas passage 124; however other locations and configurations of the radiant assembly gas passage 144 are possible. At a proximal location to the end wall 98 of the housing body 90, the radiant assembly gas passage 144 extends upwards a height 132 from the base 88. Furthermore, the radiant assembly gas passage 144 exits through a radiant assembly gas outlet 148 formed through the surface 130 of the end wall 98. In some embodiments, the radiant assembly gas outlet 148 is positioned adjacent to the redirection nozzle 128 and the convection heat application point 134 of the convection heating assembly 106; however other locations are possible.

As discussed above, the radiant assembly gas passage 144 is coupled to the radiant assembly gas inlet 146. As such, the radiant assembly gas inlet 146 is in fluid communication with the radiant assembly gas outlet 148 by way of the radiant assembly gas passage 144. As a result, a radiant assembly gas (i.e., compressed air, nitrogen, or other such gas) supplied to the radiant assembly gas inlet 146, and the radiant assembly gas flows through the radiant assembly gas passage 144 towards the end wall 98. Moreover, when the radiant assembly gas reaches the end wall 98, the radiant assembly gas flows out through the radiant assembly gas outlet 148 at the convection heat application point 134. In an embodiment, the radiant assembly gas outlet 148 is configured such that as the radiant assembly gas flows out of the radiant assembly gas outlet 148 such that the radiant assembly gas is directed to flow along or over the radiant heating assembly 102 in the opposite direction of arrow 142 illustrated in FIG. 4. As a result, the radiant assembly gas that flows along the radiant heating assembly 102 is configured to flow in an opposite direction as the convection assembly gas that flows out of the convection assembly gas outlet 114. In one non-limiting example, the radiant assembly gas that flows from the radiant assembly gas outlet 148 is configured to draw heat away from the convection heat application point 134, as well as draw or otherwise direct radiant heat, and in some cases convection heat, away from the surface of the reinforcing layers 48.

Referring back to FIG. 4, with continued reference to FIGS. 5 and 6, the heating apparatus 84 is operably attached to the composite material placement head 64 such that the radiant heating assembly 102 and the convection heating assembly 106 are adjacent to the reinforcing layers 48 as they are placed onto the composite layup mold 68. In some embodiments, the material placement machine 52 (FIG. 2), the composite material placement head 64, and the heating apparatus 84 are electronically coupled to the electronic controller 136. Furthermore, the electronic controller 136 is configured to send and receive signals to the material placement machine 52 during the formation of the composite material layup 46. The electronic controller 136 is communicably coupled to a radiant assembly gas control valve 150 which is in fluid communication with a radiant assembly gas supply line 152. The radiant assembly gas control valve 150 is operably controlled by the electronic controller 136 to control the flow of radiant assembly gas to the radiant assembly gas inlet 146 and the at least one radiant assembly gas passage 144. During operation, the electronic controller 136 sends a signal or other such command that instructs the radiant assembly gas control valve 150 to open or close to control the flow of the radiant assembly gas to the radiant assembly gas inlet 146. Moreover, in some embodiments, the electronic controller 136 is programmed such that the radiant assembly gas control valve 150 and the convection assembly gas control valve 138 are not both open at the same time. In other words, when the electronic controller 136 sends a signal to open one of the radiant assembly gas control valve 150 and the convection assembly gas control valve 138, the electronic controller 136 also sends a control signal to close the other one of radiant assembly gas control valve 150 and the convection assembly gas control valve 138. As a result, the heating apparatus 84 is controlled such that only one of the radiant assembly gas and the convection assembly gas flows out of the radiant assembly gas outlet 148 and the convection assembly gas outlet 114 at a given time. Additionally, in some embodiments, a common gas supply 153 (i.e., compressed air, nitrogen, or other gas) is in fluid communication with the composite material placement head 64 and other components of the material placement machine 52 (FIG. 2) to provide the convection assembly gas, radiant assembly gas and other such air used by the material placement machine 52. Additionally, the common gas supply 153 is communicably coupled to the electronic controller 136 such that the electronic controller 136 controls the flow of gas from the common gas supply 153, as needed. However, alternative embodiments of the material placement machine 52 (FIG. 2) can be configured with a separate gas supply for each of the convection assembly gas, and radiant assembly gas, and the electronic controller 136 is configured to monitor and control the separate gas supply, as needed.

In some embodiments, the electronic controller 136 is programmed, or otherwise configured to open the radiant assembly gas control valve 150 during operational conditions such as but not limited to, stopping or slowdown of the material placement machine 52 (FIG. 2), elevated heat detected at the material application point 78 (FIG. 4), or other such detected abnormal operation condition of the material placement machine 52. As further shown in FIGS. 5 and 6, an embodiment of the heating apparatus 84 includes at least one sensor 154 operably coupled to the housing 86, or other such component of the heating apparatus 84. The sensor 154 is configured as a heat sensor, a motion sensor, an orientation sensor, or other such sensor and the sensor 154 is configured to monitor and collect data related to the operation of the material placement machine 52 (FIG. 2). Moreover, the sensor 154 is communicably coupled to the electronic controller 136 (FIG. 4) such that data collected by the sensor 154 is received and used by the electronic controller 136 during the operation and control of the material placement machine 52 (FIG. 2) and the heating apparatus 84.

In one non-limiting example, the sensor 154 is configured to monitor the temperature at the material application point 78 (FIG. 2) and/or the convection heat application point 134. If the sensor 154 detects a temperature outside of a pre-determined operational temperature range then the electronic controller 136 (FIG. 4) sends a signal to close the convection assembly gas control valve 138 and open the radiant assembly gas control valve 150. As a result, the radiant assembly gas flows into the radiant assembly gas inlet 146 and exits through the radiant assembly gas outlet 148 formed in the housing body 90 of the heating apparatus 84. The radiant assembly gas is directed to flow along the radiant heating assembly 102 in the opposite direction as arrow 142 (FIG. 4). As a result, the flow of radiant assembly gas is used to draw heat away from the reinforcing layer 48 (FIG. 4) that has been placed on the surface of the composite layup mold 68 (FIG. 4). In one non-limiting example, the ability to draw heat away from the reinforcing layers 48 is advantageous to help keep the composite material layup 46 (FIG. 4) from overheating during an abnormal operational condition (i.e., elevated temperature or stopping of the material placement machine 52). Additionally, in alternative embodiments, the sensor 154 is configured to monitor and collect data of other operational parameters (i.e., movement of material placement machine 52) and the electronic controller 136 is programmed to send operational control signals based off the additional data collected.

Referring back to FIG. 6, the heating apparatus 84 includes at least one first cooling passage 156 formed within the first sidewall 94 and at least one second cooling passage 158 formed within the second sidewall 96 of the housing body 90. Additionally, a cooling gas inlet 160 is in fluid communication with the first cooling passage 156 and the second cooling passage 158 such that a cooling gas supplied to the cooling gas inlet 160 flows into each of the first cooling passage 156 and the second cooling passage 158. Furthermore, a first cooling gas outlet 162 is formed in the first sidewall 94 and coupled to a second end of the first cooling gas passage 156, and a second cooling gas outlet 164 is formed in the second sidewall 96 and coupled to a second end of the second cooling gas passage 158. As a result, in some embodiments, the cooling gas circulates through the first cooling gas passage 156 and the second cooling gas passage 158 and the cooling gas exits through the first cooling gas outlet 162 and the second cooling gas outlet 164.

In one non-limiting example, each of the first cooling gas passage 156 and the second cooling gas passage 158 are configured to extend along a length 165 of the first sidewall 94 and the second sidewall 96, respectively. Moreover, an embodiment of the first cooling gas passage 156 and the second cooling gas passage 158 are configured to follow a serpentine pattern, or other such pattern, within the housing body 90 and the cooling gas flows through each of the first cooling gas passage 156 and the second cooling gas passage 158 to cool the housing 86 of the heating apparatus 84 during operation.

Referring back to FIG. 4, with continued reference to FIG. 6, the electronic controller 136 is coupled to the material placement machine 52 (FIG. 2), the composite material placement head 64, and the heating apparatus 84. The electronic controller 136 is configured to send and receive signals to the material placement machine 52 (FIG. 2) during the formation of the composite material layup 46. Furthermore, an embodiment of the electronic controller 136 is communicably coupled to a cooling gas control valve 166 which is in fluid communication with a cooling gas supply line 168. Moreover, the cooling gas control valve 166 is operably controlled by the electronic controller 136 to control the flow of cooling gas to the cooling gas inlet 160. The cooling gas then circulates through each of the first cooling gas passage 156 and the second cooling gas passage 158 to help cool the housing 86 and other components of the heating apparatus 84 during operation. Generally, the electronic controller 136 sends a signal or other such command, that instructs the cooling gas control valve 166 to open so the cooling gas continuously circulates through the first cooling gas passage 156 and the second cooling gas passage 158. However, the electronic controller 136 is also programmed to send a signal to close the cooling gas control valve 166 when the flow of cooling gas is not needed. Additionally, in some embodiments, the common gas supply 153 (i.e., compressed air, nitrogen, or other gas) is configured to provide the convection assembly gas, radiant assembly gas, and cooling gas. However, alternative embodiments of the material placement machine 52 (FIG. 2) can be configured with a separate gas supply for each of the convection assembly gas, radiant assembly gas, and cooling gas, as needed.

### Industrial Applicability

In general, the foregoing disclosure finds utility in various applications such as in producing composite material structures that are incorporated into aircraft, construction equipment, automobiles, and other such machines and equipment. As outlined above, the composite material layup 46 is fabricated by placing a plurality of reinforcing layers 48 onto the composite layup mold 68, or other such substrate. Moreover, in some embodiments, the composite material layup 46 includes reinforcing layers 48 that are composed of dissimilar materials having different material properties, such as but not limited to, heat absorption, conductivity, and other such properties. In one non-limiting example, one of the reinforcing layers 48 has a low absorption of the radiant heat emitted from the radiant heating assembly 102. As a result, some embodiments of the material placement machine 52 include the heating apparatus 84 that is configured to provide multiple heat sources such as but not limited to, radiant heat, convection heat, and the like.

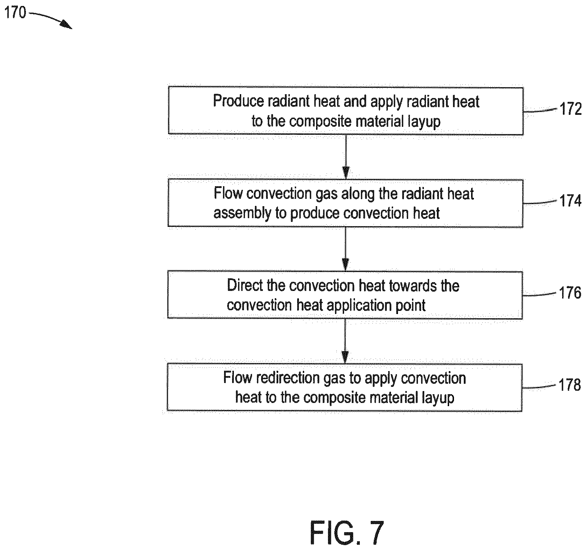

FIG. 7, with continued reference to FIGS. 1-6, illustrates an exemplary method 170 of heating the composite material layup 46 using the heating apparatus 84 configured with both the radiant heating assembly 102 and the convection heating assembly 106. In a first block 172, the radiant heating assembly 102 of the heating apparatus 84 produces radiant heat from the radiant heating element 104. In one non-limiting example, the radiant heating element 104 is configured as an IR heating element; however other radiant heating elements are possible. Furthermore, the radiant heating assembly 102 directs the radiant heat towards the surface of the composite material layup 46 such that the radiant heat is applied to the reinforcing layers 48. In one non-limiting example, at least one of the reinforcing layers 48 is composed with bundles of reinforcing fibers 80 that readily absorb radiant heat (i.e., carbon or graphite). As a result, the radiant heat produced by the radiant heating assembly 102 is used to heat and tack the reinforcing layers 48 that are sensitive to radiant heat.

In a next block 174, the convection heating assembly 106 of the heating apparatus 84 produces convection heat that is used to heat and tack the reinforcing layers 48 that make up the composite material layup 46. In one non-limiting example, the convection heat is produced by flowing convection assembly gas over and/or along the radiant heating assembly 102. The convection assembly gas flows from the convection assembly gas outlet 114 in the housing body 90, and the convection assembly gas is directed to flow along the length 126, or other such dimension of the radiant heating assembly 102. In some embodiments, the convection assembly gas is heated by the radiant heating element 104 as the convection assembly gas flows from the convection assembly gas outlet 114 formed in the bridge structure 120. Moreover, in an embodiment, the bridge structure 120 is positioned above the radiant heating element 104 and the bridge structure 120 extends between the first sidewall 94 and the second sidewall 96 of the housing body 90. Additionally, in some embodiments the convection assembly gas outlet 114 is shaped using certain geometry to create a turbulent air flow as the convection assembly gas flows from the convection assembly gas outlet 114. In some cases, the turbulent airflow improves the heating of the convection assembly gas as it flows along the radiant heating element 104.

Furthermore, in a next block 176 the convection heat is directed towards the convection heat application point 134 which is located at the end wall 98 of the housing body 90. In one non-limiting example, the convection heat application point 134 is positioned adjacent to the surface of the composite material layup 46 that is being formed on the composite layup mold 68. In a next block 178, redirection gas flows from at least one redirection nozzle 128 formed in the surface 130 of the end wall 98, and the redirection gas directs the convection heat towards the surface of the composite material layup 46. In some embodiments, the redirection nozzle 128 is positioned adjacent to the convection heat application point 134. Therefore, as the convection heat reaches the convection heat application point 134, the redirection nozzle 128 is configured to direct the convection heat towards the composite material layup 46 in order to heat and tack the plurality of reinforcing layers 48.

While the foregoing detailed description has been given and provided with respect to certain specific embodiments, it is to be understood that the scope of the disclosure should not be limited to such embodiments, but that the same are provided simply for enablement and best mode purposes. Moreover, while some features are described in conjunction with certain specific embodiments, these features are not limited to use with only the embodiment with which they are described, but instead may be used together with or separate from, other features disclosed in conjunction with alternate embodiments.

## Claims

1. A heating apparatus (84) for heating a reinforcing layer (48) of a composite material layup (46) , the heating apparatus (84) comprising:
a housing (86) including a base (88) and a housing body (90) extending upwards from the base (88) to define a housing interior space (92);
a radiant heating assembly (102) disposed within the housing interior space (92) and configured to transfer a radiant heat to the reinforcing layer (48);
a convection heating assembly (106) formed within the housing (86) including at least one convection assembly gas passage (108) formed within the housing body (90);
a convection assembly gas outlet (114) coupled to an end of the at least one convection assembly gas passage (108), wherein a convection assembly gas flows through the at least one convection assembly gas passage (108) and the convection assembly gas flows through the convection assembly gas outlet (114), and wherein the convection assembly gas outlet (114) is configured to direct the convection assembly gas to flow along the radiant heating assembly (102) towards a convection heat application point (134) defined by the housing body (90) in order to heat the convection assembly gas and produce a convection heat; characterized that it further comprises:
at least one redirection gas passage (124) formed in the base (88) of the housing (86), the at least one redirection gas passage (124) configured to transport a redirection gas to the convection heat application point (134); and
a redirection nozzle (128) positioned at the convection heat application point (134), the redirection nozzle (128) formed in the housing body (90) and coupled to an end of the at least one redirection gas passage (124), wherein the redirection gas flows from the redirection nozzle (128) such that the redirection gas directs the convection assembly gas and the convection heat towards the reinforcing layer (48).

2. The heating apparatus (84) of claim 1, wherein the convection assembly gas outlet (114) is formed with a convection outlet geometry configured to produce a turbulent airflow as the convection assembly gas flows from the convection assembly gas outlet (114).

3. The heating apparatus (84) of claim 1 or 2, further comprising a convection assembly gas inlet (110) formed in the housing body (90), wherein the convection assembly gas inlet (110) is coupled to a first end (112) of the at least one convection assembly gas passage (108), and wherein the convection assembly gas inlet (110) is in fluid communication with the convection assembly gas outlet (114).

4. The heating apparatus (84) of claim 3, wherein the convection heating assembly (106) includes a bridge structure (120) positioned above the radiant heating assembly (102) and the bridge structure (120) extends between a first sidewall (94) of the housing body (90) and a second sidewall (96) of the housing body (90), and wherein the convection assembly gas outlet (114) is formed in an exterior surface (122) of the bridge structure (120).

5. The heating apparatus (84) of any of claims 1 to 4, further comprising at least one radiant assembly gas passage (144) formed within the base (88) of the housing (86), wherein a first end of the at least one radiant assembly gas passage (144) is coupled to a radiant assembly gas inlet (146) formed in the housing body (90), and wherein a second end of the at least one radiant assembly gas passage (144) is coupled to a radiant assembly gas outlet (148) formed in the housing body (90) such that the radiant assembly gas inlet (146) is in fluid communication with the radiant assembly gas outlet (148).

6. The heating apparatus (84) of claim 5, wherein a radiant assembly gas that flows into the radiant assembly gas inlet (146) is transported through the at least one radiant assembly gas passage (144) to the radiant assembly gas outlet (148), and wherein as the radiant assembly gas flows from the radiant assembly gas outlet (148) the radiant assembly gas is directed over the radiant heating assembly (102) to draw the radiant heat away from the reinforcing layer (48).

7. The heating apparatus (84) of claim 6, further comprising an electronic controller (136)communicably coupled to the heating apparatus (84), wherein the heating apparatus (84) includes a control valve (138) operably coupled to the at least one convection assembly gas passage (108) and the at least one radiant assembly gas passage (144), and wherein the electronic controller (136) is programmed to selectively activate the control valve (138) such that the convection assembly gas is supplied to the convection heating assembly (106) as needed and the radiant assembly gas is supplied to the radiant heating assembly (102) as needed.

8. The heating apparatus (84) of any of claims 1 to 7, further comprising a cooling gas inlet (160) in fluid communication with at least one first cooling passage (156) and at least one second cooling passage (158) formed within the housing body (90).

9. The heating apparatus (84) of claim 8, further comprising at least one first cooling gas outlet (162) formed in a first sidewall (94) of the housing body (90) and at least one second cooling gas outlet (164) formed in a second sidewall (96) of the housing body (90), wherein the at least one first cooling gas outlet (162) is coupled to an end of the at least one first cooling passage (156) and the at least one second cooling gas outlet (164) is coupled to an end of the at least one second cooling passage (158), and wherein a cooling gas circulates through the at least one first cooling passage (156) and the at least one second cooling passage (158) to reduce an operating temperature of the housing (86).

10. A method of heating one or more reinforcing layers (48) during manufacture of a composite material layup (46), the method comprising:
producing a radiant heat from a radiant heating assembly (102) and directing the radiant heat towards the one or more reinforcing layers (48) to heat the one or more reinforcing layers (48);
flowing a convection assembly gas along the radiant heating assembly (102) to heat the convection assembly gas to produce a convection heat,
directing the convection assembly gas and the convection heat towards a convection heat application point (134); characterized that it further comprises:
flowing a redirection gas from at least one redirection nozzle (128) formed at the convection heat application point (134); and
directing the convection heat towards the reinforcing layers (48) with the redirection gas that flows from the at least one redirection nozzle (128) such that the one or more reinforcing layers (48) are simultaneously heated by the radiant heat and the convection heat.

11. The method of claim 10, wherein flowing the convection assembly gas along the radiant heat assembly (102) includes forming at least one convection assembly gas outlet (114) having an outlet geometry, and wherein the outlet geometry is configured to produce a turbulent flow as the convection assembly gas flows from the at least one convection assembly gas outlet (114) and flows along the radiant heating assembly (102).

12. The method of claim 10 or 11, further comprises programming an electronic controller (136) to selectively control a flow of the convection assembly gas along the radiant heating assembly (102) such that the convection assembly gas is heated as needed.

13. The method of claim 12, wherein programming the electronic controller (136) further includes selectively controlling a flow of a radiant assembly gas along the radiant heating assembly (102), and wherein the flow of the radiant assembly gas is directed away from the reinforcing layers (48) to prevent overheating of the one or more reinforcing layers (48).

14. The method of any of claims 10 to 13, wherein the composite material layup (46) includes a first reinforcing layer forming a first material layer and a second reinforcing layer forming a second material layer, and wherein the first material layer and the second material layer are configured as dissimilar layers such that the at least one of the first reinforcing layer and the second reinforcing layer is configured to readily absorb both the radiant heat and the convection heat and at least one of the first reinforcing layer and the second reinforcing layer is configured to readily absorb only the convection heat.

15. The method of claim 14, wherein the first material layer comprises a carbon fiber material, and wherein the second material layer comprises a glass-fiber material.

## Patentansprüche

1. Heizvorrichtung (84) zum Heizen einer Verstärkungsschicht (48) einer Verbundwerkstoffmaterialschichtung (46), wobei die Heizvorrichtung (84) aufweist:
ein Gehäuse (86) mit einer Basis (88) und einem Gehäusekörper (90), der sich nach oben von der Basis (88) erstreckt, um einen Gehäuseinnenraum (92) zu definieren;
eine Strahlungsheizbaugruppe (102), die innerhalb des Gehäuseinnenraums (92) angeordnet und dazu konfiguriert ist, Strahlungswärme zu der Verstärkungsschicht (48) zu übertragen;
eine Konvektionsheizbaugruppe (106), die innerhalb des Gehäuses (86) ausgebildet ist und mindestens eine Konvektionsbaugruppengaspassage (108) aufweist, die innerhalb des Gehäusekörpers (90) ausgebildet ist;
einen Konvektionsbaugruppengasauslass (114), der mit einem Ende der mindestens einen Konvektionsbaugruppengaspassage (108) gekoppelt ist, wobei ein Konvektionsbaugruppengas durch die mindestens eine Konvektionsbaugruppengaspassage (108) strömt und das Konvektionsbaugruppengas durch den Konvektionsbaugruppengasauslass (114) strömt, und wobei der Konvektionsbaugruppengasauslass (114) dazu konfiguriert ist, das Konvektionsbaugruppengas dazu zu richten, entlang der Strahlungsheizbaugruppe (102) in Richtung eines Konvektionswärmebeaufschlagungspunktes (134) zu strömen, der durch den Gehäusekörper (90) definiert ist, um das Konvektionsbaugruppengas zu erwärmen und eine Konvektionswärme zu erzeugen; **dadurch gekennzeichnet, dass** sie des Weiteren aufweist:
mindestens eine Umrichtungsgaspassage (124), die in der Basis (88) des Gehäuses (86) ausgebildet ist, wobei die mindestens eine Umrichtungsgaspassage (124) dazu konfiguriert ist, ein Umrichtungsgas zu dem Konvektionswärmebeaufschlagungspunkt (134) zu transportieren; und
eine Umrichtungsdüse (128), die an dem Konvektionswärmebeaufschlagungspunkt (134) angeordnet ist, wobei die Umrichtungsdüse (128) in dem Gehäusekörper (90) ausgebildet ist und mit einem Ende der mindestens einen Umrichtungsgaspassage (124) gekoppelt ist, wobei das Umrichtungsgas von der Umrichtungsdüse (128) aus derart strömt, dass das Umrichtungsgas das Konvektionsbaugruppengas und die Konvektionswärme in Richtung der Verstärkungsschicht (48) richtet.

2. Heizvorrichtung (84) nach Anspruch 1, wobei der Konvektionsbaugruppengasauslass (114) mit einer Konvektionsauslassgeometrie ausgebildet ist, die dazu konfiguriert ist, eine turbulente Luftströmung zu erzeugen, wenn das Konvektionsbaugruppengas von dem Konvektionsbaugruppengasauslass (114) aus strömt.

3. Heizvorrichtung (84) nach Anspruch 1 oder 2, des Weiteren mit einem Konvektionsbaugruppengaseinlass (110), der in dem Gehäusekörper (90) ausgebildet ist, wobei der Konvektionsbaugruppengaseinlass (110) mit einem ersten Ende (112) der mindestens einen Konvektionsbaugruppengaspassage (108) gekoppelt ist, und wobei der Konvektionsbaugruppengaseinlass (110) in Fluidkommunikation mit dem Konvektionsbaugruppengasauslass (114) ist.

4. Heizvorrichtung (84) nach Anspruch 3, wobei die Konvektionsheizbaugruppe (106) eine Brückenstruktur (120) aufweist, die der Strahlungsheizbaugruppe (102) angeordnet ist, und sich die Brückenstruktur (120) zwischen einer ersten Seitenwand (94) des Gehäusekörpers (90) und einer zweiten Seitenwand (96) des Gehäusekörpers (90) erstreckt, und wobei der Konvektionsbaugruppengasauslass (114) in einer Außenfläche (122) der Brückenstruktur (120) ausgebildet ist.

5. Heizvorrichtung (84) nach einem der Ansprüche 1 bis 4, des Weiteren mit mindestens einer Strahlungsbaugruppengaspassage (144), die innerhalb der Basis (88) des Gehäuses (86) angeordnet ist, wobei ein erstes Ende der mindestens einen Strahlungsbaugruppengaspassage (144) mit einem Strahlungsbaugruppengaseinlass (146) gekoppelt ist, der in dem Gehäusekörper (90) ausgebildet ist, und wobei ein zweites Ende der mindestens einen Strahlungsbaugruppengaspassage (144) mit einem Strahlungsbaugruppengasauslass (148) gekoppelt ist, der in dem Gehäusekörper (90) derart ausgebildet ist, dass der Strahlungsbaugruppengaseinlass (146) in Fluidkommunikation mit dem Strahlungsbaugruppengasauslass (148) ist.

6. Heizvorrichtung (84) nach Anspruch 5, wobei ein Strahlungsbaugruppengas, das in den Strahlungsbaugruppengaseinlass (146) strömt, durch die mindestens eine Strahlungsbaugruppengaspassage (144) zu dem Strahlungsbaugruppengasauslass (148) transportiert wird, und wobei, wenn das Strahlungsbaugruppengas von dem Strahlungsbaugruppengasauslass (148) aus strömt, das Strahlungsbaugruppengas über die Strahlungsheizbaugruppe (102) gerichtet ist, um die Strahlungswärme weg von der Verstärkungsschicht (48) zu ziehen.

7. Heizvorrichtung (84) nach Anspruch 6, des Weiteren mit einer Elektroniksteuerung (136), die kommunizierfähig mit der Heizvorrichtung (84) gekoppelt ist, wobei die Heizvorrichtung (84) ein Steuerungsventil (138) aufweist, das wirksam mit der mindestens einen Konvektionsbaugruppengaspassage (108) und der mindestens einen Strahlungsbaugruppengaspassage (144) gekoppelt ist, und wobei die Elektroniksteuerung (136) dazu programmiert ist, wahlweise das Steuerungsventil (138) zu aktivieren, derart, dass das Konvektionsbaugruppengas zu der Konvektionsheizbaugruppe (106) wie benötigt zugeführt wird und das Strahlungsbaugruppengas zu der Strahlungsheizbaugruppe (102) wie benötigt zugeführt wird.

8. Heizvorrichtung (84) nach einem der Ansprüche 1 bis 7, des Weiteren mit einem Kühlgaseinlass (160) in Fluidkommunikation mit mindestens einer ersten Kühlpassage (156) und mindestens einer zweiten Kühlpassage (158), die innerhalb des Gehäusekörpers (90) ausgebildet sind.

9. Heizvorrichtung (84) nach Anspruch 8, des Weiteren mit mindestens einem ersten Kühlgasauslass (162), der an einer ersten Seitenwand (94) des Gehäusekörpers (90) ausgebildet ist und mindestens einem zweiten Kühlgasauslass (164), der innerhalb einer zweiten Seitenwand (96) des Gehäusekörpers (90) ausgebildet ist, wobei der mindestens eine erste Kühlgasauslass (162) mit einem Ende der mindestens einen ersten Kühlpassage (156) gekoppelt ist und der mindestens einen zweiten Kühlgasauslass (164) mit einem Ende der mindestens einen zweiten Kühlpassage (158) gekoppelt ist, und wobei ein Kühlgas durch die mindestens eine erste Kühlpassage (156) und die mindestens eine zweite Kühlpassage (158) zirkuliert, um eine Betriebstemperatur des Gehäuses (86) zu reduzieren.

10. Verfahren zum Erwärmen von ein oder mehreren Verstärkungsschichten (48) während des Herstellens einer Verbundwerkstoffmaterialschichtung (46), wobei das Verfahren aufweist:
Erzeugen einer Strahlungswärme von einer Strahlungsheizbaugruppe (102) und Richten der Strahlungswärme in Richtung der ein oder mehreren Verstärkungsschichten (48), um die ein oder mehreren Verstärkungsschichten (48) zu erwärmen;
Strömen eines Konvektionsbaugruppengases entlang der Strahlungsheizbaugruppe (102) zum Erwärmen des Konvektionsbaugruppengases zum Erzeugen einer Konvektionswärme;
Richten des Konvektionsbaugruppengases und der Konvektionswärme in Richtung eines Konvektionswärmebeaufschlagungspunkts (134); **dadurch gekennzeichnet, dass** sie des Weiteren aufweist:
Strömen eines Umrichtungsgases von mindestens einer Umrichtungsdüse (128), die an dem Konvektionswärmebeaufschlagungspunkt (134) ausgebildet ist; und
Richten der Konvektionswärme in Richtung der Verstärkungsschichten (48) mit dem Umrichtungsgas, das von der mindestens einen Umrichtungsdüse (128) aus derart strömt, dass die einen oder mehreren Verstärkungsschichten (48) gleichzeitig durch die Strahlungswärme und die Konvektionswärme erwärmt werden.

11. Verfahren nach Anspruch 10, wobei das Strömen des Konvektionsbaugruppengases entlang der Strahlungsheizbaugruppe (102) das Ausbilden mindestens eines Konvektionsbaugruppengasauslasses (114) aufweist, der eine Auslassgeometrie aufweist, und wobei die Auslassgeometrie dazu konfiguriert ist, eine turbulente Strömung zu erzeugen, wenn das Konvektionsbaugruppengas von dem mindestens einen Konvektionsbaugruppengasauslass (114) aus strömt und entlang der Strahlungsheizbaugruppe (102) strömt.

12. Verfahren nach Anspruch 10 oder 11, des Weiteren mit dem Programmieren einer Elektroniksteuerung (136) zum wahlweisen Steuern einer Strömung des Konvektionsbaugruppengases entlang der Strahlungsheizbaugruppe (102) derart, dass das Konvektionsbaugruppengas nach Bedarf erwärmt wird.

13. Verfahren nach Anspruch 12, wobei das Programmieren der Elektroniksteuerung (136) des Weiteren das wahlweise Steuern einer Strömung eines Strahlungsbaugruppengases entlang der Strahlungsheizbaugruppe (102) aufweist, und wobei die Strömung des Strahlungsbaugruppengases weg von den Verstärkungsschichten (48) gerichtet ist, um ein Überhitzen der ein oder mehreren Verstärkungsschichten (48) zu vermeiden.

14. Verfahren nach einem der Ansprüche 10 bis 13, wobei die Verbundwerkstoffmaterialschichtung (46) eine erste Verstärkungsschicht aufweist, die eine erste Materialschicht ausbildet und eine zweite Verstärkungsschicht aufweist, die eine zweite Materialschicht ausbildet, und wobei die erste Materialschicht und die zweite Materialschicht dazu konfiguriert sind, und ähnliche Schichten derart zu sein, dass die mindestens eine von der ersten Verstärkungsschicht und der zweiten Verstärkungsschicht dazu konfiguriert ist, einfach sowohl die Strahlungswärme als auch die Konvektionswärme zu absorbieren, und mindestens eine von der ersten Verstärkungsschicht und der zweiten Verstärkungsschicht dazu konfiguriert ist, nur die Konvektionswärme einfach zu absorbieren.

15. Verfahren nach Anspruch 14, wobei die erste Materialschicht ein Karbonfasermaterial aufweist, und wobei die zweite Materialschicht ein Glasfasermaterial aufweist.

## Revendications

1. Appareil de chauffage (84) pour chauffer une couche de renforcement (48) d'un stratifié de matériau composite (46), l'appareil de chauffage (84) comprenant :
un logement (86) comprenant une base (88) et un corps de logement (90) s'étendant vers le haut à partir de la base (88) pour définir un espace intérieur de logement (92) ;
un ensemble de chauffage à rayonnement (102) disposé à l'intérieur de l'espace intérieur de logement (92) et conçu pour transférer une chaleur rayonnante à la couche de renforcement (48) ;
un ensemble de chauffage à convection (106) formé à l'intérieur du logement (86), comprenant au moins un passage à gaz d'ensemble à convection (108) formé à l'intérieur du corps de logement (90) ;
une sortie de gaz d'ensemble à convection (114) accouplée à une extrémité de l'au moins un passage à gaz d'ensemble à convection (108), un gaz d'ensemble à convection s'écoulant à travers l'au moins un passage à gaz d'ensemble à convection (108) et le gaz d'ensemble à convection s'écoulant à travers la sortie de gaz d'ensemble à convection (114), et la sortie de gaz d'ensemble à convection (114) étant conçue pour diriger le gaz d'ensemble à convection de sorte qu'il s'écoule le long de l'ensemble de chauffage à rayonnement (102) en direction d'un point d'application de chaleur de convection (134) défini par le corps de logement (90) afin de chauffer le gaz d'ensemble à convection et de produire une chaleur de convection ; **caractérisé en ce qu'**il comprend, en outre :
au moins un passage à gaz de redirection (124) formé dans la base (88) du logement (86), l'au moins un passage à gaz de redirection (124) étant conçu pour transporter un gaz de redirection jusqu'au point d'application de chaleur de convection (134) ; et
une buse de redirection (128) placée au niveau du point d'application de chaleur de convection (134), la buse de redirection (128) étant formée dans le corps de logement (90) et accouplée à une extrémité de l'au moins un passage à gaz de redirection (124), le gaz de redirection s'écoulant à partir de la buse de redirection (128) de telle sorte que le gaz de redirection dirige le gaz d'ensemble à convection et la chaleur de convection en direction de la couche de renforcement (48).

2. Appareil de chauffage (84) selon la revendication 1, dans lequel la sortie de gaz d'ensemble à convection (114) est formée de façon à présenter une géométrie de sortie de convection conçue pour produire un écoulement d'air turbulent à mesure que le gaz d'ensemble à convection s'écoule à partir de la sortie de gaz d'ensemble à convection (114).

3. Appareil de chauffage (84) selon la revendication 1 ou 2, comprenant, en outre, une entrée de gaz d'ensemble à convection (110) formée dans le corps de logement (90), dans lequel l'entrée de gaz d'ensemble à convection (110) est accouplée à une première extrémité (112) de l'au moins un passage à gaz d'ensemble à convection (108), et dans lequel l'entrée de gaz d'ensemble à convection (110) est en communication fluidique avec la sortie de gaz d'ensemble à convection (114).

4. Appareil de chauffage (84) selon la revendication 3, dans lequel l'ensemble de chauffage à convection (106) comprend une structure formant pont (120) placée au-dessus de l'ensemble de chauffage à rayonnement (102) et la structure formant pont (120) s'étend entre une première paroi latérale (94) du corps de logement (90) et une seconde paroi latérale (96) du corps de logement (90), et dans lequel la sortie de gaz d'ensemble à convection (114) est formée dans une surface extérieure (122) de la structure formant pont (120).

5. Appareil de chauffage (84) selon l'une quelconque des revendications 1 à 4, comprenant, en outre, au moins un passage à gaz d'ensemble à rayonnement (144) formé à l'intérieur de la base (88) du logement (86), dans lequel une première extrémité de l'au moins un passage à gaz d'ensemble à rayonnement (144) est accouplée à une entrée de gaz d'ensemble à rayonnement (146) formée dans le corps de logement (90), et dans lequel une seconde extrémité de l'au moins un passage à gaz d'ensemble à rayonnement (144) est accouplée à une sortie de gaz d'ensemble à rayonnement (148) formée dans le corps de logement (90) de telle sorte que l'entrée de gaz d'ensemble à rayonnement (146) est en communication fluidique avec la sortie de gaz d'ensemble à rayonnement (148).

6. Appareil de chauffage (84) selon la revendication 5, dans lequel un gaz d'ensemble à rayonnement qui s'écoule dans l'entrée de gaz d'ensemble à rayonnement (146) est transporté à travers l'au moins un passage à gaz d'ensemble à rayonnement (144) jusqu'à la sortie de gaz d'ensemble à rayonnement (148), et dans lequel, à mesure que le gaz d'ensemble à rayonnement s'écoule à partir de la sortie de gaz d'ensemble à rayonnement (148), le gaz d'ensemble à rayonnement est dirigé sur l'ensemble de chauffage à rayonnement (102) pour entraîner la chaleur rayonnante de façon à l'éloigner de la couche de renforcement (48).

7. Appareil de chauffage (84) selon la revendication 6, comprenant, en outre, un dispositif de commande électronique (136) couplé de manière communicante avec l'appareil de chauffage (84), dans lequel l'appareil de chauffage (84) comprend une vanne de commande (138) accouplée de manière fonctionnelle à l'au moins un passage à gaz d'ensemble à convection (108) et l'au moins un passage à gaz d'ensemble à rayonnement (144), et dans lequel le dispositif de commande électronique (136) est programmé pour activer de manière sélective la vanne de commande (138) de telle sorte que le gaz d'ensemble à convection soit fourni à l'ensemble de chauffage à convection (106) selon la nécessité et que le gaz d'ensemble à rayonnement soit fourni à l'ensemble de chauffage à rayonnement (102) selon la nécessité.

8. Appareil de chauffage (84) selon l'une quelconque des revendications 1 à 7, comprenant, en outre, une entrée de gaz de refroidissement (160) en communication fluidique avec au moins un premier passage de refroidissement (156) et au moins un second passage de refroidissement (158) formés à l'intérieur du corps de logement (90).

9. Appareil de chauffage (84) selon la revendication 8, comprenant, en outre, au moins une première sortie de gaz de refroidissement (162) formée dans une première paroi latérale (94) du corps de logement (90) et au moins une seconde sortie de gaz de refroidissement (164) formée dans une seconde paroi latérale (96) du corps de logement (90), dans lequel l'au moins une première sortie de gaz de refroidissement (162) est accouplée à une extrémité de l'au moins un premier passage de refroidissement (156) et l'au moins une seconde sortie de gaz de refroidissement (164) est accouplée à une extrémité de l'au moins un second passage de refroidissement (158), et dans lequel un gaz de refroidissement circule à travers l'au moins un premier passage de refroidissement (156) et l'au moins un second passage de refroidissement (158) pour réduire une température de fonctionnement du logement (86).

10. Procédé de chauffage d'une ou de plusieurs couches de renforcement (48) lors de la fabrication d'un stratifié de matériau composite (46), le procédé comprenant :
produire une chaleur rayonnante à partir d'un ensemble de chauffage à rayonnement (102) et diriger la chaleur rayonnante vers la ou les couches de renforcement (48) pour chauffer la ou les couches de renforcement (48) ;
faire s'écouler un gaz d'ensemble à convection le long de l'ensemble de chauffage à rayonnement (102) pour chauffer le gaz d'ensemble à convection afin de produire une chaleur de convection ;
diriger le gaz d'ensemble à convection et la chaleur de convection vers un point d'application de chaleur de convection (134) ; **caractérisé en ce qu'**il comprend, en outre :
faire s'écouler un gaz de redirection à partir d'au moins une buse de redirection (128) formée au niveau du point d'application de chaleur de convection (134) ; et
diriger la chaleur de convection vers les couches de renforcement (48) à l'aide du gaz de redirection s'écoulant à partir de l'au moins une buse de redirection (128) de telle sorte que la ou les couches de renforcement (48) soient chauffées simultanément par la chaleur rayonnante et la chaleur de convection.

11. Procédé selon la revendication 10, dans lequel le fait de faire s'écouler le gaz d'ensemble à convection le long de l'ensemble de chauffage à rayonnement (102) comprend le fait de former au moins une sortie de gaz d'ensemble à convection (114) présentant une certaine géométrie de sortie, et dans lequel la géométrie de sortie est conçue pour produire un écoulement turbulent à mesure que le gaz d'ensemble à convection s'écoule à partir de l'au moins une sortie de gaz d'ensemble à convection (114) et s'écoule le long de l'ensemble de chauffage à rayonnement (102).

12. Procédé selon la revendication 10 ou 11, comprenant, en outre, le fait de programmer un dispositif de commande électronique (136) pour commander de manière sélective un écoulement du gaz d'ensemble à convection le long de l'ensemble de chauffage à rayonnement (102) de telle sorte que le gaz d'ensemble à convection soit chauffé selon la nécessité.

13. Procédé selon la revendication 12, dans lequel le fait de programmer le dispositif de commande électronique (136) comprend, en outre, le fait de commander de manière sélective un écoulement d'un gaz d'ensemble à rayonnement le long de l'ensemble de chauffage à rayonnement (102), et dans lequel l'écoulement du gaz d'ensemble à rayonnement est dirigé de façon à l'éloigner des couches de renforcement (48) pour empêcher une surchauffe de la ou des couches de renforcement (48).

14. Procédé selon l'une quelconque des revendications 10 à 13, dans lequel le stratifié de matériau composite (46) comprend une première couche de renforcement formant une première couche de matériau et une seconde couche de renforcement formant une seconde couche de matériau, et dans lequel la première couche de matériau et la seconde couche de matériau sont conçues comme des couches dissemblables de telle sorte que l'au moins une de la première couche de renforcement et la seconde couche de renforcement soit conçue pour absorber aisément à la fois la chaleur rayonnante et la chaleur de convection et au moins une de la première couche de renforcement et la seconde couche de renforcement soit conçue pour absorber aisément uniquement la chaleur de convection.

15. Procédé selon la revendication 14, dans lequel la première couche de matériau comprend un matériau de fibre de carbone, et dans lequel la seconde couche de matériau comprend un matériau de fibre de verre.
